(19) **Europäisches Patentamt / European Patent Office / Office européen des brevets**

(11) **EP 4 349 800 A1**

(12) # EUROPEAN PATENT APPLICATION
published in accordance with Art. 153(4) EPC

(43) Date of publication:
**10.04.2024 Bulletin 2024/15**

(21) Application number: **22811347.8**

(22) Date of filing: **25.05.2022**

(51) International Patent Classification (IPC):
**C04B 35/486** (2006.01)   **A61C 7/14** (2006.01)
**C04B 35/645** (2006.01)

(52) Cooperative Patent Classification (CPC):
**A61C 7/14; C04B 35/486; C04B 35/645**

(86) International application number:
**PCT/JP2022/021371**

(87) International publication number:
**WO 2022/250077 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.05.2021 JP 2021089267**

(71) Applicant: **Tosoh Corporation**
**Yamaguchi 746-8501 (JP)**

(72) Inventors:
• **SHIMOYAMA, Tomotaka**
**Ayase-shi, Kanagawa 252-1123 (JP)**
• **KURAMOTO, Yasunori**
**Ayase-shi, Kanagawa 252-1123 (JP)**

(74) Representative: **Müller-Boré & Partner**
**Patentanwälte PartG mbB**
**Friedenheimer Brücke 21**
**80639 München (DE)**

(54) **SINTERED BODY AND METHOD FOR MANUFACTURING SAME, AND ORTHODONTIC BRACKET**

(57)    There are provided a sintered body having both excellent mechanical strength and translucency, a method for producing the same and an orthodontic bracket.

A sintered body, comprising a crystal grain having a cubic domain and a tetragonal domain, a stabilizer and lanthanum being dissolved in zirconia to form a solid solution as a matrix, and the amount of stabilizer contained being 1% or more by mole and 6% or less by mole, in which an average torque strength is 1.00 kgf·cm or more, and an in-line transmittance is 35% or more for visible light having a wavelength of 600 nm at a sample thickness of 1 mm.

[Fig 1]

EP 4 349 800 A1

**Description**

Technical Field

The present disclosure relates to a sintered body, a method for producing the same, and an orthodontic bracket.

Background Art

Sintered bodies that contain zirconia as a main component and that have translucency (hereinafter, also referred to as "translucent zirconia sintered bodies") have better mechanical strength than glass and alumina. Because of this, translucent zirconia sintered bodies have been investigated as materials for application purposes requiring mechanical properties as well as optical properties.

For example, Patent Literature 1 discloses a translucent zirconia sintered body as a material suitable for a dental material, an exterior member, and the like. This translucent zirconia sintered body is a zirconia sintered body containing 3% by mole of yttria.

Patent Literature 2 discloses a translucent zirconia sintered body as a material suitable for a dental material, especially an orthodontic bracket. This translucent zirconia sintered body is a zirconia sintered body containing 8% by mole of yttria.

Patent Literature 3 discloses a translucent zirconia sintered body in which a stabilizer and lanthanum are dissolved in zirconia to form a solid solution.

Patent Document 4 discloses a translucent zirconia sintered body in which a stabilizer and lanthanum are dissolved in zirconia to form a solid solution and which has high mechanical strength without requiring post-sintering treatment such as polishing treatment.

Citation List

Patent Literature

PTL 1: Japanese Unexamined Patent Application Publication No. 2008-050247
PTL 2: Japanese Unexamined Patent Application Publication No. 2009-269812
PTL 3: Japanese Unexamined Patent Application Publication No. 2017-105689
PTL 4: Japanese Unexamined Patent Application Publication No. 2020-001988

Summary of Invention

Technical Problem

The translucent zirconia sintered bodies of Patent Literatures 3 and 4 have higher translucency than conventional translucent zirconia sintered bodies and translucent alumina, and also have mechanical strength applicable to orthodontic brackets. However, recent demands for orthodontic brackets having higher strength and improved aesthetic appearance have led to the need for higher mechanical strength and transparency in orthodontic brackets containing translucent zirconia sintered materials.

It is an object of the present disclosure to provide at least one of a translucent zirconia sintered body that forms a solid solution with lanthanum and that contains a crystal grain having a controlled domain structure, the sintered body having both excellent mechanical strength and translucency, a method for producing the sintered body and an orthodontic bracket.

Solution to Problem

The inventors have conducted studies on a sintered body, a method for producing the same and an orthodontic bracket, and have found that a sintered body and an orthodontic bracket having both excellent mechanical strength and translucency are produced by controlling the state of a material to be sintered under specific sintering conditions. These findings have led to the completion of the present invention.

The present invention is defined in the claims, and the gist of the present disclosure is described below.

[1] A sintered body, comprising a crystal grain having a cubic domain and a tetragonal domain, a stabilizer and lanthanum being dissolved in zirconia to form a solid solution as a matrix, and an amount of the stabilizer contained being 1% or more by mole and 6% or less by mole, in which an average torque strength is 1.00 kgf·cm or more, and an in-line transmittance is 35% or more for visible light having a wavelength of 600 nm at a sample thickness of 1 mm.

[2] The sintered body described in [1], in which a deviation of torque strength is 0.30 or less.

[3] The sintered body described in [1] or [2], in which a lanthanum content is 1% or more by mole and 10% or less by mole.

[4] The sintered body described in any one of [1] to [3], in which the stabilizer is at least one selected from the group consisting of yttrium, scandium, calcium, magnesium and cerium.

[5] The sintered body described in any one of [1] to [4], comprising at least one of a transition metal and a lanthanoid other than lanthanum.

[6] A method for producing the sintered body described in any one of [1] to [5], comprising: a mixing step of mixing a zirconia source, a stabilizer source, and a lanthanum source to prepare a mixed powder; a molding step of molding the mixed powder to provide a green body; a sintering step of placing the green body in an inner container, placing the inner container in an outer container and sintering the green body at a sintering temperature of 1,650°C or higher to provide a sintered body; and a temperature lowering step of lowering the temperature from the sintering temperature to 1,000°C at a temperature lowering rate of more than 1 °C/min.

[7] The method for producing a sintered body described in [6], in which the outer container is composed of carbon.

[8] An orthodontic bracket, comprising the sintered body described in any one of [1] to [5].

[9] An orthodontic bracket, comprising a sintered body containing a crystal grain having a cubic domain and a tetragonal domain, a stabilizer and lanthanum being dissolved in zirconia to form a solid solution as a matrix, and an amount of the stabilizer contained being 1% or more by mole and 6% or less by mole,

in which an average torque strength is 1.00 kgf·cm or more, and an in-line transmittance is 10% or more for visible light having a wavelength of 600 nm at a sample thickness of 1 mm after hydrothermal treatment at 140°C for 72 hours.

[10] The orthodontic bracket described in [9], in which a deviation of torque strength is 0.30 or less.

Advantageous Effects of Invention

According to the present disclosure, it is possible to provide at least one of a sintered body having both excellent mechanical strength and translucency, a method for producing the same and an orthodontic bracket.

Brief Description of Drawings

[Fig. 1] A schematic perspective view illustrating an example of the shape of an orthodontic bracket.

[Fig. 2] A schematic plan view illustrating an example of the shape of an orthodontic bracket.

[Fig. 3] A schematic cross-sectional view of the orthodontic bracket of Fig. 2 taken along plane (90).

[Fig. 4] A view illustrating a case where an arcuate curved surface portion (R) is provided at a corner portion where a wire slot bottom surface and a gingival-side wire slot side surface intersect with each other, and the view being an enlarged view illustrating the vicinity of the corner portion in an enlarged manner.

[Fig. 5] A schematic side view illustrating an example of a method for preparing a measurement sample for measurement of a converted transmittance in an orthodontic bracket.

[Fig. 6] A schematic side view illustrating an example of a method for preparing a measurement sample for measurement of a converted transmittance in an orthodontic bracket.

[Fig. 7] An enlarged view illustrating the vicinity of an aperture position to explain the aperture position of a sintered body when the converted transmittance of an orthodontic bracket is measured.

[Fig. 8] A schematic view illustrating an example of the placement of a green body in a sintering step.

[Fig. 9] A view illustrating an XRD pattern result in Example 1.

Description of Embodiments

A sintered body of the present disclosure will be described below with reference to an example of an embodiment.

A sintered body of the present embodiment is a sintered body in which not only lanthanum (La) is simply contained in the sintered body, but also lanthanum is dissolved in zirconia to form a solid solution (hereinafter, also referred to as "lanthanum-dissolved zirconia sintered body"). When lanthanum is dissolved to form a solid solution, a finer texture structure of the crystal grains of the sintered body is provided.

In the sintered body of the present embodiment, it can be confirmed from a powder X-ray diffraction (hereinafter, also referred to as "XRD") pattern that lanthanum is dissolved in zirconia to form a solid solution. The sintered body of the present embodiment has a peak of 20 = 30 ± 2° (hereinafter, also referred to as a "main peak") in XRD measurement using CuKα radiation (λ = 0.15418 nm) as a radiation source. The main peak is a peak in which the XRD peak of tetragonal zirconia (2θ = 30.0 ± 2°) and the XRD peak of cubic zirconia (2θ = 29.6 ± 2°) overlap, and is an XRD peak having the maximum diffraction intensity in the XRD pattern of the sintered body. The lattice parameter determined from the main peak is larger than that of the sintered body in which lanthanum is not dissolved. This indicates that lanthanum is dissolved in zirconia to form a solid solution in the sintered body of the present embodiment. For example, in the case of a lanthanum-dissolved zirconia sintered body containing lanthanum and 3% by mole of yttrium serving as a stabilizer, the lattice parameter of the lanthanum-dissolved zirconia sintered body is larger than the lattice parameter of a sintered body containing 3% by mole of yttrium serving as a stabilizer and the balance being zirconia. The fact that the lattice parameter is large can be confirmed from the fact that the main peak shifts to lower angles in the XRD pattern.

Preferably, the sintered body of the present embodiment is substantially free of a composite oxide composed of lanthanum and zirconium and a lanthanum oxide (hereinafter, also referred to as "lanthanum oxide or the like"). When lanthanum oxide or the like is not contained, the sintered body of the present embodiment is a sintered body having higher translucency. The absence of lanthanum oxide or the like can be confirmed from the fact that the XRD pattern of the sintered body of the present embodiment has no corresponding XRD peak other than the XRD peak of zirconia. Examples of lanthanum oxide or the like include $La_2Zr_2O_7$ and $La_2O_3$.

The lanthanum content of the sintered body of the present embodiment is preferably 1% or more by mole. When lanthanum is contained in an amount of 2% or more by mole, finer domains in the crystal grains are easily provided. The lanthanum content (% by mole) is a proportion by mole of lanthanum in terms of oxide to the total of zirconia, the stabilizer in terms of oxide and lanthanum ($La_2O_3$) in terms of oxide in the sintered body. For example, when yttrium is contained as a stabilizer, the lanthanum content [% by mole] may be determined from $\{La_2O_3 \text{ [mol]}/(Y_2O_3 + La_2O_3 + ZrO_2) \text{ [mol]}\} \times 100$.

To dissolve all lanthanum in zirconia to form a solid solution, the lanthanum content of the sintered body is preferably 10% or less by mole. The lanthanum content is preferably 1% or more by mole, 2% or more by mole or 3% or more by mole. The lanthanum content is preferably 10% or less by mole, 7% or less by mole, or 6.5% or less by mole. Any combination of these upper and lower limits may be used. Thus, for example, the lanthanum content may be 1% or more by mole and 10% or less by mole, 1% or more by mole and 7% or less by mole, 2% or more by mole and 10% or less by mole, 2% or more by mole and 7% or less by mole, 2% or more by mole and 6.5% or less by mole or 3% or more by mole and 6.5% or less by mole.

Preferably, the sintered body of the present embodiment is free of a lanthanoid rare-earth element except lanthanum. Examples of the lanthanoid rare-earth element except lanthanum include europium (Eu), gadolinium (Gd), terbium (Tb), dysprosium (Dy), holnium (Ho), erbium (Er), thulium (Tm), ytterbium (Yb) and lutetium (Lu). Preferably, the sintered body of the present embodiment is free of a lanthanoid rare-earth element except lanthanum. However, in consideration of measurement errors in composition analysis, for example, the lanthanoid rare-earth element except lanthanum contained in the sintered body of the present embodiment can be contained in an amount of 0.6% or less by mole.

The sintered body of the present embodiment contains a stabilizer. The stabilizer is dissolved in zirconia to form a solid solution. When lanthanum and the stabilizer are dissolved in zirconia to form a solid solution, the crystal grains of the sintered body contain cubic domains and tetragonal domains even in a low-temperature environment such as room temperature.

The stabilizer is an element having the function of stabilizing zirconia. The stabilizer is preferably at least one selected from the group consisting of, for example, yttrium (Y), scandium (Sc), calcium (Ca), magnesium (Mg) and cerium (Ce), more preferably at least one selected from the group consisting of calcium, magnesium and yttrium, still more preferably yttrium.

The stabilizer content of the sintered body of the present embodiment is 1% or more by mole and 6% or less by mole in order to partially stabilize zirconia. The stabilizer content is preferably 1% or more by mole or 2% or more by mole. The stabilizer content is preferably 6% or less by mole, 5% or less by mole, 4.9% or less by mole, or 4% or less by mole. Any combination of these upper and lower limits may be used. Thus, the stabilizer content is preferably, for example, 2% or more by mole, and preferably 5% or less by mole, 4.9% or less by mole, or 4% or less by mole. The stabilizer content is preferably 2% or more by mole, and is preferably 5% or less by mole, 4.9% or less by mole, or 4% or less by mole.

The stabilizer content (% by mole) is the proportion by mole of the stabilizer to the total of zirconia, the stabilizer and lanthanum ($La_2O_3$) in terms of oxides in the sintered body. When yttrium is contained as a stabilizer, the stabilizer content [% by mole] may be determined from $\{(Y_2O_3) \text{ [mol]}/(Y_2O_3 + La_2O_3 + ZrO_2) \text{ [mol]}\} \times 100$.

The sintered body of the present embodiment is what is called a zirconia sintered body, and is a sintered body containing zirconia as a matrix (main component). Thus, the total amount of the stabilizer and lanthanum contained in the sintered body of the present embodiment needs to be less than 50% by mole, and preferably, is 20% or less by mole or 10% or less by mole, and 1% or more by mole or 2% or more by mole. Any combination of these upper and lower limits may be used. The zirconia content of the sintered body of the present embodiment is preferably more than 50% by mole, 60% or more by mole, 80% or more by mole, more than 83% by mole, or 90% or more by mole.

The sintered body of the present embodiment may contain alumina ($Al_2O_3$). When alumina is contained, the translucency of the sintered body having particularly high strength is easily increased. When the sintered body of the present embodiment contains alumina, the alumina content is preferably 100 ppm or more by mass or 200 ppm or more by mass, and 2,000 ppm or less by mass, or 1,000 ppm or less by mass. Any combination of these upper and lower limits may be used. Thus, the alumina content is preferably, for example, 100 ppm or more by mass and 2,000 ppm or less by mass, more preferably 200 ppm or more by mass and 1,000 ppm or less by mass. The alumina content (ppm by mass) is the proportion by mass of aluminum ($Al_2O_3$) in terms of oxide to the total mass of zirconia, the stabilizer, lanthanum ($La_2O_3$) in terms of oxides, and aluminum ($Al_2O_3$) in terms of oxide in the sintered body. In the case where alumina and lanthanum are contained and where yttrium is contained as a stabilizer, the alumina content [ppm by mass] may be determined from $\{Al_2O_3\ [g]/(Y_2O_3 + La_2O_3 + Al_2O_3 + ZrO_2)\ [g]\} \times 1,000,000$.

The sintered body of the present embodiment has the above-described composition, but may contain incidental impurities. An example of the incidental impurities is hafnia ($HfO_2$). In the calculation of the values related to the composition such as the theoretical densities, the amounts of stabilizer, additive components, and the like in the present embodiment, the calculation may be performed by regarding hafnia ($HfO_2$), which is an incidental impurity, as zirconia ($ZrO_2$).

As a preferred composition of the sintered body of the present embodiment, the following composition by mole can be exemplified.

Zirconia: 90% or more by mole and 95% or less by mole
Stabilizer: 2% or more by mole and 5% or less by mole
Lanthanum: 2% or more by mole and 6.5% or less by mole

As a particularly preferred composition of the sintered body of the present embodiment, the following composition by mole can be exemplified.

Zirconia: 92% or more by mole and 94% or less by mole
Stabilizer: 2% or more by mole and 4% or less by mole
Lanthanum: 3% or more by mole and 5% or less by mole

The stabilizer in the above compositions is preferably yttrium.

The sintered body of the present embodiment has a cubic domain and a tetragonal domain in a crystal grain. When the cubic domain and the tetragonal domain are contained in the crystal grain, not only the translucency is high, but also the strength is high. In the present embodiment, the domain is at least one of a crystallite and an aggregate of crystallites in the crystal grain, and is a portion in which the same crystal structure continues. The cubic domain is a domain having a cubic fluorite-type crystal structure, and the tetragonal domain is a domain having a tetragonal fluorite-type crystal structure. The fact that the sintered body of the present embodiment has the cubic domain and the tetragonal domain in its crystal grain can be confirmed by Rietveld analysis of the XRD pattern. That is, it can be confirmed that the sintered body contains a cubic phase and a tetragonal phase by the Rietveld analysis of the XRD pattern. The crystallite size of each of the cubic phase and the tetragonal phase calculated by the Rietveld analysis is smaller than the crystal grain size; thus, it can be confirmed that the cubic domain and the tetragonal domain are contained in the crystal grain. To confirm that the sintered body contains the cubic domain and the tetragonal domain in the crystal grain, it is sufficient to confirm that the average crystallite size described below is smaller than the average crystal grain size. The sintered body of the present embodiment contains the crystal grains each having the cubic domain and the tetragonal domain, and is preferably composed of the crystal grains each having the cubic domain and the tetragonal domain. As described above, the sintered body of the present embodiment contains at least the crystal grains having domains composed of crystallites having different crystal structures. Thus, the sintered body of the present embodiment is different from a sintered body composed of crystal grains each having a crystal structure composed of only cubic zirconia and crystal grains each having a crystal structure composed of only tetragonal zirconia.

Since the sintered body of the present embodiment includes the above-described domains, the crystal structure thereof includes a cubic fluorite-type structure and a tetragonal fluorite-type structure. Furthermore, preferably, the sintered body of the present embodiment is substantially free of a monoclinic phase. The "substantially free of a monoclinic phase" indicates that an XRD peak of a monoclinic phase is not observed in the XRD pattern.

The lanthanum concentration in the cubic domain and the tetragonal domain may be the same. In the sintered body of the present embodiment, the cubic domain and the tetragonal domain in each crystal grain may have different lanthanum concentrations. Furthermore, the lanthanum concentration in the cubic domain may be higher than the lanthanum concentration in the tetragonal domain. In the present embodiment, the lanthanum concentration in each domain can be observed by composition analysis in transmission electron microscope (hereinafter, also referred to as "TEM") observation.

In the sintered body of the present embodiment, the average crystallite size (hereinafter, also simply referred to as "average crystallite size") calculated from the full width at half maximum (hereinafter, also referred to as "FWHM") of the main peak is preferably 255 nm or less. In the present embodiment, the average crystallite size is calculated without distinguishing between the cubic crystallite and the tetragonal crystallite. When the average crystallite size is 250 nm or less, 200 nm or less, 150 nm or less or 130 nm or less, the translucency is easily increased. When the average crystallite size is 100 nm or less, 60 nm or less, 50 nm or less or 30 nm or less, light scattering is further inhibited. Thereby, the translucency of the sintered body is further increased.

The average crystallite size is preferably small. However, in the sintered body of the present embodiment, the average crystallite size is, for example, 2 nm or more, 5 nm or more, 10 nm or more or 15 nm or more.

The fact that the average crystallite size is 255 nm or less can be confirmed by the fact that the FWHM is 0.1536° or more in the XRD pattern of the sintered body of the present embodiment. Thus, the sintered body of the present embodiment preferably exhibits an FWHM of 0.1536° or more. A larger FWHM indicates a smaller average crystallite size. For example, the FWHM is 0.154° or more when the average crystallite size is 250 nm or less. The FWHM is 0.1635° or more when the average crystallite size is 200 nm or less. The FWHM is 0.178° or more when the average crystallite size is 150 nm or less. The FWHM is 0.187° or more when the average crystallite size is 130 nm or less. The FWHM is 0.25° or more when the average crystallite size is 100 nm or less. The FWHM is preferably 0.3° or more, more preferably 0.4° or more. As the crystallinity increases, the FWHM of the XRD peak decreases. The FWHM that can be measured in a normal XRD measurement is up to about 40°. The FWHM of the main peak of the sintered body of the present embodiment is, for example, 1° or less or 0.7° or less.

The XRD pattern in the present embodiment is measured using CuKα radiation as a radiation source, and the measurement conditions include the following conditions.

Accelerating current/voltage: 40 mA/40 kV
Radiation source: CuKα radiation (λ = 1.5405 Å)
Measurement mode: step scan
Scanning condition: 0.04 °/sec
Measurement range: 2θ = 20° to 80°
Divergence slit: 0.5 degree
Scattering slit: 0.5 degree
Receiving slit: 0.3 mm
Detector: scintillation counter

The XRD pattern can be measured by using a common powder X-ray diffractometer (for example, UltimaIII, available from Rigaku Corporation). The crystalline XRD peak is a peak that is detected by determining the 2θ of the peak maximum in the analysis of the XRD pattern with common analysis software (for example, JADE7, available from MID). Conditions for analyzing the XRD pattern include the following conditions.

Fitting condition: automatic, precise background, distributed pseudo Voigt function (peak shape)
Background removal method: fitting process
Kα2 removal method: Kα1/Kα2 ratio = 0.497
Smoothing method: B-Spline curve
Smoothing condition: second-derivative method, α-cut value = 3, χ threshold = 1.5

The respective crystallite sizes of the cubic phase and the tetragonal phase contained in the crystal grains of the sintered body of the present embodiment can be determined by the Rietveld analysis of the XRD pattern of the sintered body of the present embodiment. That is, the XRD pattern of the sintered body is separated into an XRD peak derived from a cubic phase and an XRD peak derived from a tetragonal phase by the Rietveld analysis. The full width at half maximum of the XRD peak of each crystal structure after separation is determined, and the crystallite size may be determined from the resulting full width at half maximum using the following Scherrer equation.

$$D = K \times \lambda / ((\beta - B) \times \cos\theta)$$

In the equation above, D is a crystallite size (nm) of each crystal, K is the Scherrer constant (1.0), λ is the wavelength of CuKα (0.15418 nm), β is the full width at half maximum (°), B is the instrument constant (0.1177°), and θ is the diffraction angle (°) of the XRD peak. The XRD peak used during determination of the full width at half maximum is the XRD peak of 2θ = 30.0 ± 2° for the tetragonal phase and the XRD peak of 2θ = 29.6 ± 2° for the cubic phase.

The average crystal grain size of the sintered body of the present embodiment is preferably 20 μm or more or 30 μm or more. The average crystal grain size is preferably 100 μm or less, 90 μm or less or 60 μm or less. Any combination of these upper and lower limits may be used. Thus, the average crystal grain size of the sintered body is, for example, 20 μm or more and 100 μm or less, 30 μm or more and 90 μm or less or 30 μm or more and 60 μm or less. When the average crystal grain size is in this range, the sintered body has high translucency. In the present embodiment, the measure of the average crystal grain size can be determined by a planimetric method.

The sintered body of the present embodiment preferably has a high density. The density varies in accordance with the amounts of the stabilizer and the lanthanum. The density of the sintered body of the present embodiment is, for example, 6.0 g/cm³ or more and 6.2 g/cm³ or less, or 6.0 g/cm³ or more and 6.12 g/cm³ or less.

The arithmetic mean roughness (hereinafter, also referred to as "Ra") of a surface of the sintered body of the present embodiment is 20 nm or more, or 25 nm or more. The arithmetic mean roughness is preferably 60 nm or less, or 45 nm or less. Any combination of these upper and lower limits may be used. Therefore, the arithmetic mean roughness of the surfaces is, for example, 20 nm or more and 60 nm or less, preferably 25 nm or more and 45 nm or less. When Ra is more than 60 nm, the mechanical strength, particularly the breaking strength, is lowered. Although Ra is preferably as small as possible, the Ra of the sintered body is about 20 nm even if the sintered body has been subjected to polishing treatment or the like.

The maximum height (hereinafter, also referred to as "Rz") of the surface of the sintered body of the present embodiment is preferably 100 nm or more, or 300 nm or more. The maximum height is preferably 1,000 nm or less, or 900 nm or less. Any combination of these upper and lower limits may be used. Thus, the maximum height of the surface is, for example, 100 nm or more and 1,000 nm or less, and is preferably 300 nm or more and 900 nm or less.

In the sintered body of the present embodiment, the root-mean-square height (hereinafter, also referred to as "Rq") of the surfaces is preferably 10 nm or more, or 20 nm or more. The root-mean-square height is preferably 100 nm or less, or 50 nm or less. Any combination of these upper and lower limits may be used. Thus, the root-mean-square height of the surface is, for example, 10 nm or more and 100 nm or less, and is preferably 20 nm or more and 50 nm or less.

In the present embodiment, Ra, Rz, and Rq can be measure by methods according to JIS B 0601.

The sintered body of the present embodiment preferably has no polishing mark on the surface thereof. Usually, a surface (also referred to as an "as-sintered surface") of a sintered body immediately after sintering is rough. Thus, the surface is smoothed by performing a post-treatment such as polishing. However, polishing marks are formed on the surface of the sintered body by the post-treatment. The polishing marks are generated along with polishing, and examples thereof include a regular streak-like pattern. In contrast, the sintered body of the present embodiment preferably has practical smoothness in a state after sintering, and in this case, the sintered body satisfies Ra, Rz and Rq described above without having a polishing mark. The polishing marks can be observed by SEM observation of the surface of the sintered body.

The sintered body of the present embodiment has high translucency. The sintered body of the present embodiment has an in-line transmittance of 35% or more for visible light having a wavelength of 600 nm at a sample thickness of 1 mm. A higher in-line transmittance results in higher transparency of the sintered body, which is preferable. The in-line transmittance of the sintered body of the present embodiment for visible light having a wavelength of 600 nm at a sample thickness of 1 mm is preferably 40% or more, more preferably 45% or more. The in-line transmittance can be, for example, 50% or less or 48% or less.

In the case where the sintered body of the present embodiment is used as an orthodontic bracket (hereinafter, also referred to as a "bracket") formed of the sintered body of the present embodiment, and even in the case where the sintered body of the present embodiment is attached to a tooth row as a bracket for a long period of time, preferably, the aesthetic property derived from translucency does not cause a sense of discomfort.

A bracket formed of the sintered body of the present embodiment will be described below with reference to the drawings. In the following drawings, for easy understanding of each configuration, for example, the scale and the number of each structure may be different from those of an actual structure.

In the drawings, an XYZ coordinate system is appropriately presented as a three-dimensional rectangular coordinate system. In the XYZ coordinate system, the Y-axis direction is the depth direction of the wire slot. The X-axis direction is the width direction of the wire slot. The Z-axis direction is a direction orthogonal to both the X-axis direction and the Y-axis direction. In all of the X-axis direction, the Y-axis direction and the Z-axis direction, a side indicated by an arrow presented in the drawings is a + side, and an opposite side is a - side.

In the following description, a positive side (+X side) in the X-axis direction is referred to as a "gingival side", and a negative side (-X side) in the X-axis direction is referred to as an "occlusal side". A positive side (+Z side) in the Z-axis direction is referred to as a "buccolabial side", and a negative side (-Z side) in the Z-axis direction is referred to as a "tooth facing side".

In the following description, for example, the shape and the structure of each component of the bracket are not particularly limited. For example, the shape and the structure of each component of any known bracket can be used.

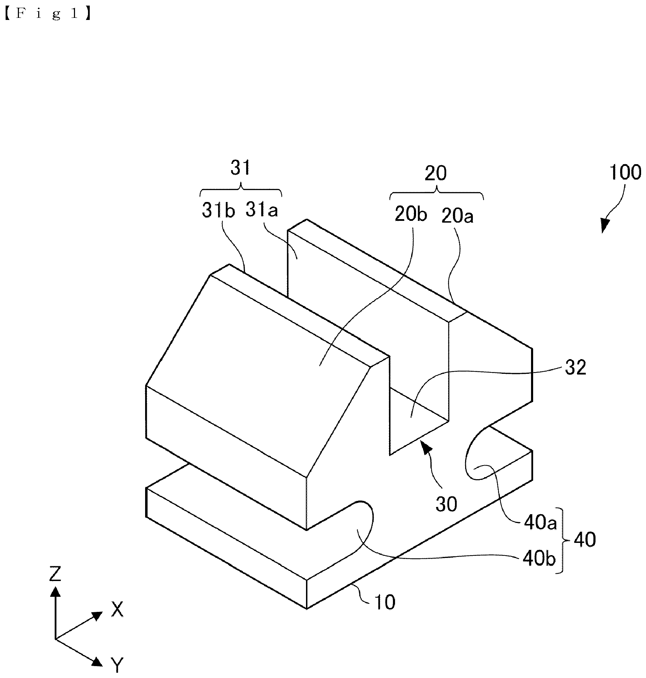

Fig. 1 is a schematic perspective view illustrating an example of the shape of an orthodontic bracket.

As illustrated in Fig. 1, an orthodontic bracket (100) of the present embodiment includes, over a base (10) to be attached to a crown, a pair of side wall portions (20) opposite to each other in a gingival-occlusal direction and a wire slot (30) configured to hold an archwire between the side wall portions (20).

The side wall portions (20) have a gingival side wall portion (20a) and an occlusal side wall portion (20b). The side wall portions (20) further include a pair of opposing recesses (40) in the gingival-occlusal direction. The recesses (40) have a gingival side recess (40a) and an occlusal side recess (40b).

The wire slot (30) has a pair of wire slot side surfaces (31) and a wire slot bottom surface (32) facing each other in the gingival-occlusal direction. The wire slot side surfaces (31) have a gingival-side wire slot side surface (31a) and an occlusal-side wire slot side surface (31b).

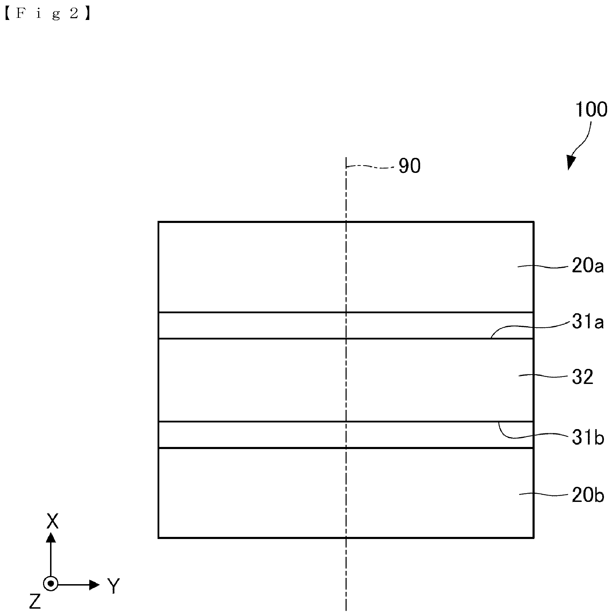

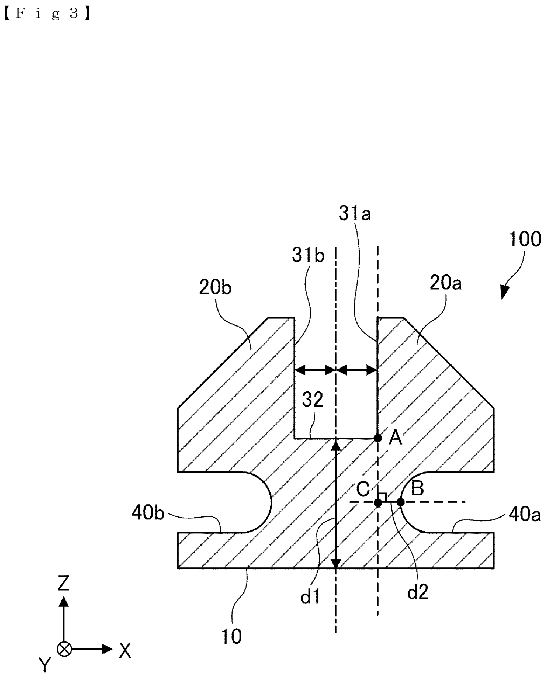

Fig. 2 is a schematic plan view illustrating an example of the shape of the orthodontic bracket. A plane (90) is a plane orthogonal to the depth direction of the wire slot and bisecting the width of the wire slot in the depth direction. Fig. 3 is a cross-sectional view of the orthodontic bracket illustrated in Fig. 2 taken along the plane (90).

As illustrated in Fig. 3, in the present embodiment, an in-out dimension (hereinafter also referred to as "I/O") refers to a distance (d1) between the wire slot bottom surface (32) and the surface of the base (10) of the tooth facing side on a line that bisects the wire slot (30) into a gingival side and an occlusal side in the cross-sectional view of the orthodontic bracket taken along the plane that is orthogonal to the depth direction of the wire slot and bisects the width of the wire slot in the depth direction.

As illustrated in Fig. 3, in a cross-sectional view of the orthodontic bracket taken along the plane that is orthogonal to the depth direction of the wire slot and that is bisects the width of the wire slot in the depth direction, letting the corner portion where the wire slot bottom surface (32) and the gingival-side wire slot side surface (31a) intersect be point A, letting the edge portion of the gingival side recess (40a) located on the most occlusal side be point B and letting the intersection of a line passing through the point A and parallel to the line bisecting the wire slot (30) into a gingival side and an occlusal side and a line passing through the point B and perpendicular to that line be point C, the thickness of the gingival side wall in the present embodiment refers to a distance (d2) between the point B and the point C.

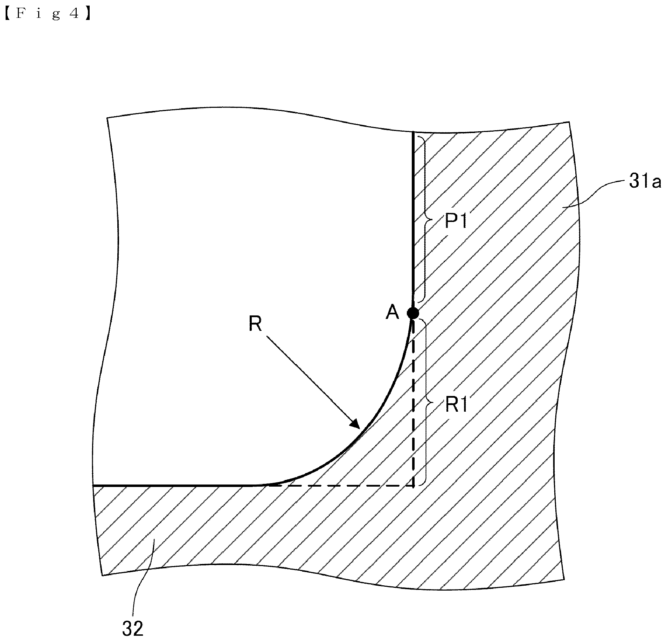

Fig. 4 illustrates a case where an arcuate curved surface portion (R) is provided at a corner portion where the wire slot bottom surface and the gingival-side wire slot side surface intersect with each other, and is an enlarged view illustrating the vicinity of the corner portion in an enlarged manner.

As illustrated in Fig. 4, the orthodontic bracket (100) in the present embodiment may have an arcuate curved surface portion (R) at the corner portion where the wire slot bottom surface (32) and the gingival-side wire slot side surface (31a) intersect. In other words, the wire slot bottom surface (32) and the gingival-side wire slot side surface (31a) may have a planar portion (P1) and an arcuate curved surface portion (R1). In this case, the point A, which is a corner portion where the wire slot bottom surface (32) and the gingival-side wire slot side surface (31a) intersect with each other, is a boundary point between the planar portion (P1) and the curved surface portion (R1) in the gingival-side wire slot side surface (31a).

The aesthetic property derived from the translucency of the bracket formed of the sintered body of the present embodiment is evaluated by, for example, a value obtained by converting the in-line transmittance of a wire slot portion after hydrothermal treatment at 140°C for 72 hours into a converted transmittance at a sample thickness of 1 mm (hereinafter, also referred to as "converted transmittance").

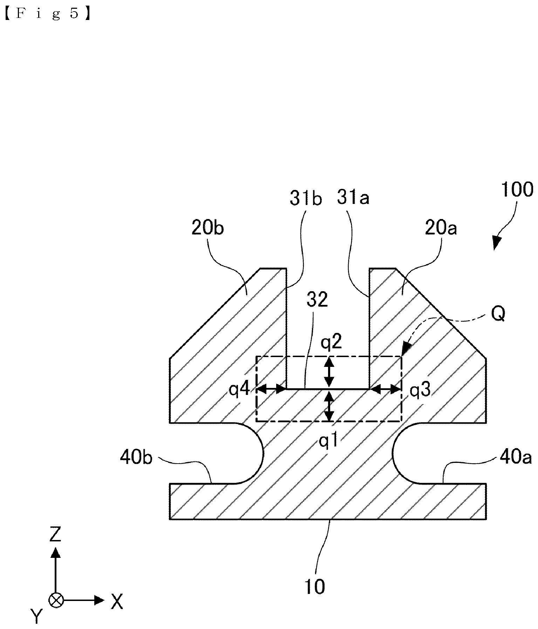

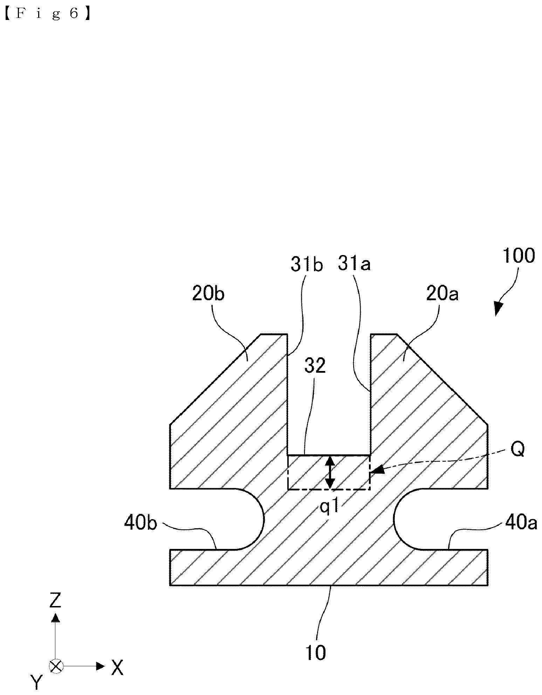

Figs. 5 and 6 are schematic side views each illustrating an example of a method for preparing a measurement sample for the measurement of the converted transmittance in the orthodontic bracket.

The measurement sample of the bracket for measurement of the converted transmittance is taken out by cutting so as to include a region (Q) framed by a dot-dash line indicated in Fig. 5 or 6.

The region (Q) illustrated in Fig. 5 has a dimension (q1), a dimension (q2), a dimension (q3) and a dimension (q4).

The dimension (q1) is 0.1 mm or more, preferably 0.3 mm or more, from the wire slot bottom surface (32) toward the tooth facing side. The dimension (q1) is preferably 3 mm or less, 2 mm or less or 1 mm or less. Any combination of these upper and lower limits may be used. Thus, the dimension (q1) has a dimension of, for example, 0.1 mm or more and 3 mm or less, preferably 0.1 mm or more and 2 mm or less, more preferably 0.3 mm or more and 1 mm or less, from the wire slot bottom surface (32) toward the tooth facing side.

The dimension (q2) is preferably 0.1 mm or more or 0.3 mm or more from the wire slot bottom surface (32) toward the buccolabial side. The dimension (q2) is preferably 3 mm or less, 2 mm or less or 1 mm or less. Any combination of these upper and lower limits may be used. Thus, the dimension (q2) has a dimension of, for example 0.1 mm or more and 3 mm or less, preferably 0.1 mm or more and 2 mm or less, more preferably 0.3 mm or more and 1 mm or less, from the wire slot bottom surface (32) toward the buccolabial side.

The dimension (q3) is preferably 0.1 mm or more or 0.3 mm or more from the corner portion where the wire slot bottom surface (32) and the gingival-side wire slot side surface (31a) intersect toward the tooth facing side. The dimension (q3) is preferably 3 mm or less, 2 mm or less or 1 mm or less. Any combination of these upper and lower limits may be used. Thus, the dimension (q3) has a dimension of, for example, 0.1 mm or more and 3 mm or less, preferably 0.1 mm or more and 2 mm or less, more preferably 0.3 mm or more and 1 mm or less, from the corner portion where the wire slot bottom surface (32) and the gingival-side wire slot side surface (31a) intersect toward the tooth facing side.

The dimension (q4) is preferably 0.1 mm or more or 0.3 mm or more from the corner portion where the wire slot bottom surface (32) and the occlusal-side wire slot side surface (31b) intersect toward the occlusal side. The dimension (q4) is preferably 3 mm or less, 2 mm or less or 1 mm or less. Any combination of these upper and lower limits may be used. Thus, the dimension (q4) preferably has a dimension of, for example, 0.1 mm or more and 3 mm or less, preferably 0.1 mm or more and 2 mm or less, more preferably 0.3 mm or more and 1 mm or less, from the corner portion where the wire slot bottom surface (32) and the occlusal-side wire slot side surface (31b) intersect toward the occlusal side.

The dimension (not illustrated) in the depth direction of the wire slot (30) in the region (Q) is not particularly limited, and may be, for example, the same dimension as the width of the wire slot (30) of the orthodontic bracket (100).

The region (Q) needs to have the above-described dimensions. However, the region (Q) preferably has only the dimension (q1) as illustrated in Fig. 6, that is, q1 > 0 and q2 = q3 = q4 = 0, in order to prevent incident light from being scattered by part of the side wall portions, from the viewpoint of the measurement accuracy of the in-line transmittance. For example, the sample including the region (Q) taken out in the above may be further cut to form a measurement sample satisfying q1 > 0 and q2 = q3 = q4 = 0.

The measurement sample for the measurement of the converted transmittance needs to have a surface roughness of Ra ≤ 0.02 μm.

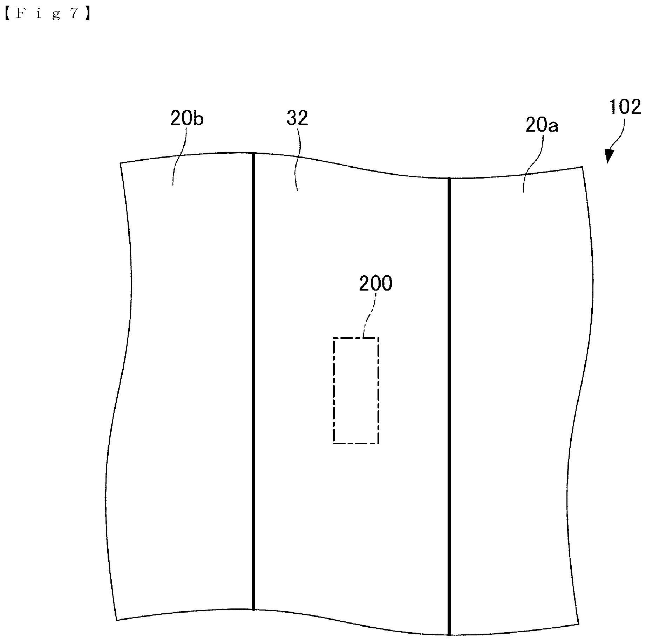

The in-line transmittance in the measurement of the converted transmittance can be measured with a common microscopic spectrophotometer (for example, MSV-370, available from JASCO Corporation) by irradiating a surface (hereinafter, also referred to as a "bond surface") facing the wire slot bottom surface of the measurement sample in the measurement of the converted transmittance with incident light and adjusting an aperture position in such a manner that transmitted light can be obtained from the wire slot bottom surface. The aperture position refers to an area range through which in-line light is transmitted in the measurement of the converted transmittance. Fig. 7 is an enlarged view illustrating the vicinity of an aperture position to explain the aperture position of a sintered body when the converted transmittance of an orthodontic bracket is measured. As illustrated in Fig. 7, an aperture (200) position is within the wire slot bottom surface (32) of a sintered body (102).

The measurement conditions include the following conditions.

Light source: halogen lamp
Measurement wavelength: 600 nm
Aperture size: 400 × 100 μm (100 μm: width direction of wire slot bottom surface)
Light transmission direction: from bond surface (polished finish) toward wire slot bottom surface (non-processed)
Number of measurement points: 5

In the present embodiment, the converted transmittance of the bracket can be determined by measuring the in-line transmittance of the measurement sample in the above-described measurement of the converted transmittance, and converting the resulting value into an in-line transmittance at a sample thickness of 1 mm by the following formula (1). For example, the in-line transmittance of an x-mm-thick sample (e.g., x is 0.1 or more and 3 or less, preferably 0.2 or more and 2 or less, more preferably 0.3 or more and 1 or less, still more preferably 0.3 or more and 0.5 or less) is measured, and the converted transmittance of a 1-mm-thick sample can be calculated using formula (1).

$$T_1 = (T_x \times 0.01)^{(1/x)} \times 100 \ [\%] \cdots (1)$$

$T_1$: converted transmittance [%]
$T_x$: measured value [%] of in-line transmittance at a sample thickness of x mm
x: measurement sample thickness [mm]

The measurement sample needs to be a sample that has been subjected to aging treatment. The aging treatment needs to be treatment in which, after the surface roughness is set to Ra ≤ 0.02 μm, pure water and a sample are placed in a pressure-resistant container composed of stainless steel, and the container is placed in an autoclave and held at 140°C for 72 hours.

The converted transmittance is preferably 10% or more, 12% or more, or 14% or more, and is preferably 25% or less or 18% or less.

In the measurement of the converted transmittance of the bracket formed of the sintered body of the present embodiment, the wire slot bottom surface means a flat surface portion. For example, when the shape of the bottom surface partially has an arcuate curved surface portion, the curved surface portion is not included in the wire slot bottom surface.

The sintered body of the present embodiment has high strength. The torque strength of the orthodontic bracket formed of the sintered body of the present embodiment may vary, depending on the dimensions of the bracket. For example, the torque strength of the bracket depends primarily on the dimensions of the bracket, the in-out dimension and the thickness of the gingival side wall. Specifically, the torque strength value also tends to increase as the in-out dimension and the thickness of the gingival side wall increase. The bracket of the present embodiment preferably has a torque strength of 1.0 kgf·cm or more when both the in-out dimension and the thickness of the gingival side wall are 1.0 mm or less, more preferably 1.0 kgf·cm or more when both the in-out dimension and the thickness of the gingival side wall are 0.6 mm or less. Moreover, when both the in-out dimension and the thickness of the gingival side wall are 0.4 mm or more, or 0.3 mm or more, the torque strength is preferably 1.0 kgf·cm or more. In the present embodiment, the torque strength of the bracket formed of the sintered body of the present embodiment is determined by pushing a stainless steel wire into a wire slot and measuring a value when the bracket is broken.

The deviation of the torque strength of the bracket is preferably 0.30 or less, more preferably 0.25 or less, still more preferably 0.20 or less, and may be 0.01 or more or 0.05 or more.

In the present embodiment, the deviation of the torque strength of the bracket formed of the sintered body of the present embodiment is the largest value of the absolute values of the differences between the measured torque strength values of multiple (for example, 2 or more and 50 or less) brackets produced and the average value thereof.

The flexural strength of the sintered body of the present embodiment is preferably 500 MPa or more, more preferably 600 MPa or more. The flexural strength of the sintered body of the present embodiment is preferably 800 MPa or more, more preferably 1,000 MPa or more, in order to expand the range of applicable applications.

The sintered body of the present embodiment preferably has a fracture toughness equivalent to or higher than a translucent zirconia sintered body composed of cubic zirconia, such as a sintered body containing 8% by mole yttrium and the balance being zirconia. Thus, the sintered body of the present embodiment can be used as a member in which a conventional translucent zirconia sintered body is used. The fracture toughness of the sintered body of the present embodiment is, for example, 1.7 MP·m$^{0.5}$ or more, 1.8 MPa·m$^{0.5}$ or more, 2 MPa·m$^{0.5}$ or more or 2.2 MPa·m$^{0.5}$ or more, and 2.5 MPa·m$^{0.5}$ or less or 3.0 MPa·m$^{0.5}$ or less.

In the present embodiment, the fracture toughness can be measured by the IF method or the SEPB method according to JIS R 1607, and a value measured by the SEPB method is particularly preferable. The fracture toughness measured by the IF method exhibits a higher value than the value of the fracture toughness measured by the SEPB method.

As described above, since the sintered body of the present embodiment has both excellent mechanical strength and translucency, the sintered body can be used for applications of known translucent zirconia sintered bodies, such as window materials, decorative members, and exterior members of electronic devices. In particular, the sintered body can be suitably used for orthodontic members and orthodontic brackets that require aesthetic properties.

A method for producing the sintered body of the present embodiment will be described below.

The sintered body of the present embodiment can be produced by a method for producing the sintered body, the method comprising a mixing step of mixing a zirconia source, a stabilizer source, and a lanthanum source to prepare a mixed powder; a molding step of molding the mixed powder to provide a green body; a sintering step of placing the green body in an inner container, placing the inner container in an outer container, and sintering the green body at a sintering temperature of 1,650°C or higher to provide a sintered body; and a temperature lowering step of lowering the temperature from the sintering temperature to 1,000°C at a temperature lowering rate of more than 1 °C/min.

In the mixing step, the zirconia source, the stabilizer source and the lanthanum source are mixed to prepare a mixed powder. Any mixing method may be used as long as the zirconia source, the stabilizer source, and the lanthanum source are uniformly mixed, and either wet mixing or dry mixing may be used. The mixing method is preferably wet mixing, more preferably wet mixing using at least one of a wet ball mill and a wet stirring mill, because the obtained mixed powder has higher uniformity.

The zirconia source is zirconia or a precursor thereof, and examples thereof include a zirconia powder having a BET specific surface area of 4 m$^2$/g or more and 20 m$^2$/g or less.

The stabilizer source is a powder of a compound containing at least one selected from the group consisting of yttrium, scandium, calcium, magnesium and cerium, and is preferably a powder of a compound containing yttrium or a precursor thereof.

The zirconia source is preferably a zirconia powder containing a stabilizer (hereinafter, also referred to as "stabilizer-containing zirconia"). Such a zirconia powder serves as a zirconia source and a stabilizer source. The stabilizer contained in the zirconia powder is preferably at least one selected from the group consisting of yttrium, scandium, calcium, magnesium and cerium, and more preferably yttrium. The stabilizer-containing zirconia powder is a zirconia powder containing a stabilizer in an amount of 1% or more by mole and 6% or less by mole in terms of oxide, and is preferably a zirconia powder having a BET specific surface area of 4 m$^2$/g or more and 20 m$^2$/g or less and containing the stabilizer in an amount of 1% or more by mole and 6% or less by mole. The amount of stabilizer contained in the stabilizer-containing zirconia powder is preferably 2% or more by mole and 5% or less by mole, more preferably 2% or more by mole and 4% or less by mole in terms of oxide.

The lanthanum source can be a compound containing lanthanum and can be at least one selected from the group consisting of lanthanum oxide, lanthanum hydroxide, lanthanum nitrate, lanthanum sulfate, lanthanum chloride, lanthanum carbonate and pyrochlore-type La$_2$Zr$_2$O$_7$. The lanthanum material is preferably at least one selected from the group consisting of lanthanum hydroxide, lanthanum oxide and La$_2$Zr$_2$O$_7$, more preferably at least one of lanthanum hydroxide and lanthanum oxide, still more preferably lanthanum hydroxide.

The mixed powder may contain an alumina raw material. The alumina source may be a compound containing aluminum, and is preferably at least one selected from the group consisting of alumina, aluminum hydroxide, aluminum carbonate and spinel, more preferably alumina. For example, the preferred alumina is at least one of α-alumina and γ-alumina, more preferably α-alumina.

The composition of the mixed powder needs to be a desired ratio. For example, zirconia is contained in an amount of 84% or more by mole and 98% or less by mole, the stabilizer is contained in an amount of 1% or more by mole and 6% or less by mole, and lanthanum is contained in an amount of 1% or more by mole and 10% or less by mole, in terms of oxides.

A preferable composition of the mixed powder includes the following composition by mole.

Zirconia: 90% or more by mole and 95% or less by mole, preferably 92% or more by mole and 94% or less by mole
Stabilizer: 2% or more by mole and 5% or less by mole, preferably 2% or more by mole and 4% or less by mole
Lanthanum: 2% or more by mole and 6.5% or less by mole, preferably 3% or more by mole and 5% or less by mole

The stabilizer in the above composition is preferably yttrium.

In the molding step, the mixed powder is molded into a green body. Any molding method may be used as long as a green body having a desired shape can be formed. The molding method may be at least one selected from the group consisting of press forming, injection molding, sheet molding, extrusion molding and cast molding, and is preferably at least one of press forming and injection molding.

The molded article may have any shape. Examples thereof include freely-selected shapes according to the purpose and use, for example, shapes, such as disk shapes, cylindrical shapes and polyhedral shapes, orthodontic brackets, semiconductor manufacturing jigs and other complex shapes.

In the sintering step, the green body is placed in an inner container, and the inner container is placed in an outer container and sintered, thereby providing a sintered body having a highly smooth surface. The container during sintering is used to avoid a decrease in the smoothness of the surface of the sintered body due to the direct contact of the green body to be sintered with the flow of the atmospheric medium in the sintering furnace, that is, to avoid an increase in the surface roughness of the sintered body due to the direct exposure of the green body to be sintered to the flow of the atmospheric gas introduced into the sintering furnace from the outside of the system.

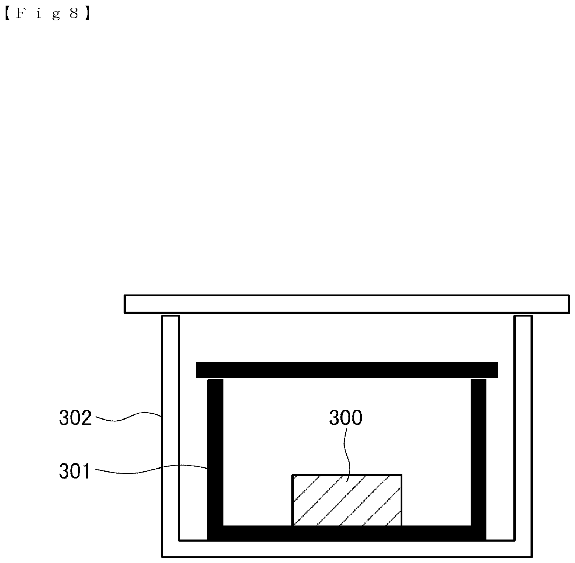

Fig. 8 is a schematic view illustrating an example of the placement of a green body in the sintering step. A green body (300) is disposed inside an inner container (301), and the inner container (301) is disposed inside an outer container (302). The inner container may have any shape as long as the green body can be disposed therein. The outer container may have any shape as long as the inner container can be disposed therein.

The inner container and the outer container may be containers other than sealed containers, that is, containers that do not block the flow of the atmospheric gas. For example, each container is such that the atmosphere in the container is not a closed system with respect to the atmosphere in the sintering furnace without directly exposing the green body to be sintered to the flow of the atmospheric gas introduced into the sintering furnace from the outside of the system. Specific examples of the container include a covered container, for example, a covered crucible or a covered sagger. In Fig. 8, the inner container (301) and the outer container (302) are each illustrated as a container with a lid. The inner container (301) is illustrated in a state in which the green body to be sintered is accommodated and a lid is disposed without sealing the inner container (301). The outer container (302) is illustrated in a state in which the inner container (301) is accommodated and a lid is disposed without sealing the outer container (302).

The material of the inner container is at least one of metal oxides and metal nitrides, preferably metal oxides, more preferably at least one selected from the group consisting of alumina, zirconia, mullite, yttria, spinel, magnesia, silicon nitride and boron nitride, more preferably at least one selected from the group consisting of alumina, zirconia, mullite and yttria, still more preferably yttria.

The material of the outer container is at least one selected from the group consisting of carbon, metal oxides and metal nitrides. In particular, the material of the outer container is preferably carbon from the viewpoints of obtaining a sintered body having both excellent mechanical strength and translucency and reducing variations in mechanical strength among sintered bodies. Moreover, the outer container is preferably composed of carbon because it is inexpensive and has high industrial utility value, compared with an outer container composed of metal oxide or metal nitride. In the production method of the present embodiment, the containers are used in a double container manner; thus, the carbon derived from the container does not adhere to the surface of the green body to be sintered, thereby easily providing a sintered body having excellent mechanical strength and translucency. Furthermore, the inventors have found that, when the outer container composed of carbon is used, variations in mechanical strength between sintered bodies are particularly reduced.

When the sintering step is a two-step sintering process described below, a primary sintered body needs to be placed in the inner container instead of the green body. That is, the secondary sintering needs to be performed by placing the primary sintered body in an inner container, placing the inner container in an outer container, and performing sintering.

In the sintering step, the green body obtained in the molding step is sintered at a sintering temperature of 1,650°C or higher. The crystal structure of the sintered body is considered to be a high-temperature-type crystal structure upon sintering at 1,650°C or higher. When the sintered body having the high-temperature-type crystal structure is subjected to the temperature lowering step, a cubic domain and a tetragonal domain can be generated in the crystal structure in the crystal grains to provide a sintered body including the crystal structure of the sintered body of the present embodiment. The sintering temperature is 1,650°C or higher, preferably 1,700°C or higher, more preferably 1,725°C or higher, still more preferably 1,750°C or higher. When a general-purpose firing furnace is used, the sintering temperature is, for example, 2,000°C or lower, 1,900°C or lower, or 1,800°C or lower.

Any sintering method may be used as long as the sintering is performed at the above sintering temperature. The sintering method may be, for example, at least one selected from the group consisting of normal-pressure sintering, pressure sintering and vacuum sintering. Normal-pressure sintering and pressure sintering are preferred.

Preferred examples of the sintering step include a sintering process in which only pressureless sintering is performed (hereinafter, also referred to as a "one-step sintering process"), and a sintering step including primary sintering in which a green body is fired at 1,000°C or higher and lower than 1,650°C to provide a primary sintered body and secondary sintering in which the primary sintered body is sintered at 1,650°C or higher (hereinafter, also referred to as a "two-step sintering process").

In the one-step sintering process, a sintered body may be provided by performing pressureless sintering in a sintering step. The pressureless sintering is a process of sintering by simply heating a green body to be sintered without applying an external force to the green body to be sintered at the time of sintering. In the present embodiment, the green body formed in the molding step may be subjected to pressureless sintering to provide a sintered body. The sintering temperature may be 1,600°C or higher, and is preferably 1,700°C or higher and 1,900°C or lower. The sintering atmosphere may be an oxidizing atmosphere or a reducing atmosphere. For the sake of simplicity, an air atmosphere is preferred.

The two-step sintering process is a process in which a green body is subjected to primary sintering to provide a primary sintered body, and the primary sintered body is subjected to secondary sintering. In the primary sintering, the green body is preferably sintered at 1,000°C or higher and lower than 1,650°C. The atmosphere of the primary sintering is preferably an oxidizing atmosphere or a reducing atmosphere, and more preferably an oxidizing atmosphere, and still more preferably an air atmosphere. For example, the primary sintering is preferably pressureless sintering in the atmosphere at 1,000°C or higher or 1,400°C or higher, and at lower than 1,650°C or 1,520°C or lower. Thereby, the resulting primary sintered body has a finer microstructure. In addition, pores are less likely to be formed in the crystal grains of the primary sintered body.

In the secondary sintering, the primary sintered body is sintered at 1,650°C or higher, preferably 1,700°C or higher, more preferably 1,725°C or higher, still more preferably 1,750°C or higher. To provide a sintered body having high strength, the secondary sintering temperature is 2,000°C or lower, preferably 1,900°C or lower, and more preferably 1,800°C or lower. When the secondary sintering temperature is 2,000°C or lower, coarse crystal grains are less likely to be generated.

To provide a sintered body having a higher density, the secondary sintering is preferably hot isostatic pressing (hereinafter, also referred to as "HIP") treatment.

The time of the HIP treatment (hereinafter, also referred to as "HIP time") is, for example, 10 minutes or more or 30 minutes or more, and 4 hours or less or 2 hours or less. To sufficiently remove pores in the sintered body during the HIP treatment, the HIP time is preferably 10 minutes or more.

Examples of a pressure medium for the HIP treatment (hereinafter, also referred to simply as a "pressure medium") include argon gas, nitrogen gas and oxygen. Common argon gas is convenient.

The pressure of the HIP treatment (hereinafter, also referred to as "HIP pressure") is preferably 5 MPa or more, more preferably 50 MPa or more. When the HIP pressure is 5 MPa or more, the elimination of pores in the sintered body is further promoted. The upper limit of the HIP pressure is not particularly specified. When an ordinary HIP apparatus is used, the HIP pressure is 200 MPa or less.

In the temperature lowering step, the temperature is lowered from the secondary sintering temperature to 1,000°C at a temperature lowering rate of more than 1 °C/min. A secondary sintering temperature of 1,650°C or higher and a temperature lowering rate of more than 1 °C/min, preferably 5 °C/min or more, more preferably 8 °C/min or more results in a sintered body containing zirconia crystal grains having a cubic domain and a tetragonal domain and having high translucency. A temperature lowering rate of 1 °C/min or less results in the formation of precipitates and a monoclinic phase; thus, the resulting sintered body has low translucency. To provide a lanthanum-dissolved zirconia sintered body having higher translucency, for example, the temperature is lowered from the firing temperature to 1,000°C at a temperature lowering rate of preferably 10 °C/min or more, more preferably 15 °C/min or more, still more preferably 30 °C/min or more, yet still more preferably 50 °C/min or more. The upper limit of the temperature lowering rate is not particularly limited, and may be, for example, 150 °C/min or less or 100 °C/min or less.

The production method of the present embodiment may include an annealing step of heat-treating the sintered body after the temperature lowering step. Subjecting the sintered body to the annealing step enables the sintered body to have further improved translucency. In the annealing step, for example, the sintered body is treated in an oxidizing atmosphere at 900°C or higher and 1,200°C or lower, preferably 980°C or higher and 1,030°C or lower.

The sintered body produced by the above method tends to have smaller variations in mechanical strength. Specifically, the deviation of the torque strength of bracket-shaped sintered bodies of the present embodiment is, for example, 0.30 or less, 0.25 or less or 0.20 or less, and is, for example, 0.01 or more or 0.05 or more. The deviation of the torque strength is preferably within the above range, and is more preferably smaller.

The occurrence of the strength failure of the bracket can be effectively inhibited; thus, the minimum torque strength of the sintered body is maintained at a high level, the reliability of the sintered body is improved, and the production stability is improved by the improvement of the yield.

EXAMPLES

While the present invention will be described in detail with reference to examples and comparative examples, the present invention is not limited to these examples.

(Measurement of Average Crystal Grain Size)

The sintered body sample was subjected to surface grinding, and then mirror-polished using diamond abrasive grains of 9 pm, 6 $\mu$m and 1 $\mu$m in this order. The polished surface was held at 1,400°C for 1 hour, thermally etched and then observed by SEM. The average crystal grain size was determined from the resulting SEM observation view by the planimetric method.

(Identification of Crystal Structure)

XRD patterns obtained by the XRD measurement of sintered body samples were identified and analyzed to identify the crystal structure of each sintered body sample and determine the presence or absence of an impurity layer. The XRD measurement was performed on a mirror-polished sintered body sample using a common powder X-ray diffractometer (instrument name: UltimaIII, available from Rigaku Corporation).

The XRD measurement was performed using CuK$\alpha$ radiation as a radiation source under the following conditions.

Accelerating current/voltage: 40 mA/40 kV
Radiation source: CuK$\alpha$ radiation ($\lambda$ = 1.5405 Å)
Measurement mode: step scan
Scanning condition: 0.04 °/sec
Measurement range: $2\theta$ = 20° to 80°
Divergence slit: 0.5 degree
Scattering slit: 0.5 degree
Receiving slit: 0.3 mm
Detector: scintillation counter

The XRD pattern was measured by using a common powder X-ray diffractometer (instrument name, UltimaIII, available from Rigaku Corporation). The crystalline XRD peak was detected by determining $2\theta$ of the peak maximum in the analysis of the XRD pattern using common analysis software (product name: JADE7, available from MID). The XRD pattern was analyzed under the following conditions.

Fitting condition: automatic, precise background, distributed pseudo Voigt function (peak shape)
Background removal method: fitting process

Kα2 removal method: Kα1/Kα2 ratio = 0.497
Smoothing method: B-Spline curve
Smoothing condition: second-derivative method, α-cut value = 3, χ threshold = 1.5

(Measurement of Average Crystallite Size)

With respect to the XRD pattern obtained by the same measurement method as in the identification of the crystal phase, the average crystallite size of the sintered body sample was determined using the Scherrer equation.

$$D = K \times \lambda / ((\beta - B) \times \cos\theta)$$

In the equation above, D is an average crystallite size (nm), K is the Scherrer constant (1.0), $\lambda$ is the wavelength of CuK$\alpha$ (0.15418 nm), $\beta$ is the full width at half maximum (°), B is the instrument constant (0.1177°), and $\theta$ is the diffraction angle (°) of the main peak. The XRD peak used during determination of the full width at half maximum is the XRD peak of $2\theta = 30.0 \pm 2°$ for the tetragonal phase and the XRD peak of $2\theta = 29.6 \pm 2°$ for the cubic phase.
With regard to the main peak, a peak in which the peak assigned to the (111) plane of the cubic phase and the peak assigned to the (111) plane of the tetragonal phase of the zirconia overlapped each other was regarded as a single peak.
The FWHM was determined using the Integral Analysis for Windows (Version 6.0), available from Rigaku Corporation.

(Measurement of Torque Strength)

For the measurement of the torque strength, a sample having a bracket shape was used. A bracket was fixed to a base as a sample, and a stainless steel wire (0.019 × 0.025 inches) was passed through the wire slot of the sample to fix the sample. The surface of the wire slot of the sample was in a condition after the HIP treatment. The stainless steel wire was pushed into the wire slot, and the torque strength when the bracket was broken was measured. The measurement was performed by preparing one or more samples for each of the examples and comparative examples. The minimum torque strength, the maximum torque strength, the average torque strength which is the average value of each measured value, and the torque strength deviation that is the maximum deviation between each measured value and the average value were determined.

(Measurement of In-Line Transmittance)

In the measurement of the in-line transmittance, a test piece-shaped sintered body was used as a sample for each of the examples and comparative examples.
The in-line transmittance of the test piece-shaped sintered body (30 mm × 25 mm, 1.0-mm-thick rectangular plate-shaped sintered body, hereinafter, also referred to simply as a "test piece") was measured by a method in accordance with a method specified by JIS K321-1. The measurement sample was irradiated with visible light having a wavelength of 600 nm, and the light flux transmitted through the measurement sample was detected by an integrating sphere, thereby measuring the in-line transmittance. The in-line transmittance thus obtained was defined as "transmittance at a thickness of 1 mm". A common haze meter (instrument name: Haze Meter NDH 2000, available from Nippon Densoku Industries Co., Ltd.) was used for the measurement.
Prior to the measurement, both surfaces of the test piece were subjected to surface grinding, and then mirror-polished using diamond abrasive grains of 9 pm, 6 $\mu$m and 1 $\mu$m in this order in such a manner that the surface roughness Ra was 0.02 $\mu$m or less.

(Measurement of Converted Transmittance)

The converted transmittance was measured for a sample obtained by subjecting a bracket-shaped sintered body to aging treatment in each of the examples and comparative examples. The aging was performed by placing pure water and the sample in a stainless pressure-resistant container, placing the container in an autoclave, and maintaining the container at 140°C for 72 hours.
After the bracket was cut so as to include the region Q illustrated in Fig. 5 and the cut portion was taken out, the cut portion of the bracket was mirror-polished by the same method as that of the test piece in such a manner that the surface roughness Ra was 0.02 $\mu$m or less. Pure water and the polished bracket were placed in a pressure-resistant container composed of stainless steel. The container was placed in an autoclave and subjected to aging treatment in which the container was held at 140°C for 72 hours to prepare a measurement sample.

A microscopic spectrophotometer (instrument name: MSV-370, available from JASCO Corporation) was used for the measurement. The bond surface of the measurement sample was irradiated with incident light, and the aperture position was adjusted in such a manner that transmitted light was obtained from the bottom surface of the wire slot, and the measurement was performed. The in-line transmittance thus obtained was defined as the in-line transmittance of the bracket. The measurement was performed under the following conditions.

Light source: halogen lamp
Measurement wavelength: 600 nm
Aperture size: 400 × 100 μm (100 μm: width direction of wire slot bottom surface)
Light transmission direction: from bond surface (polished finish) toward wire slot bottom surface (non-processed)
Number of measurement points: 5

In each of the examples and comparative examples, the converted transmittance was determined as in-line transmittance at a sample thickness of 1 mm, that is, as in-line transmittance when the sample thickness was converted into 1 mm by the following formula (1).

$$T_1 = (T_x \times 0.01)^{(1/x)} \times 100 \ [\%] \cdots (1)$$

$T_1$: converted transmittance [%]
$T_x$: in-line transmittance [%] of bracket at a sample thickness of x mm
x: measurement sample thickness [mm]

Example 1

A La(OH)$_3$ powder was added to 3% by mole of a yttrium-containing zirconia powder (BET specific surface area: 7 m$^2$/g) in such a manner that the proportion by mass of the La(OH)$_3$ powder to the zirconia powder was 11.7% by mass. The mixture was dispersed in pure water to prepare a slurry having a solid content of 50% by mass. The resulting slurry was ground by a wet ball mill using zirconia balls having a diameter of 10 mm. The average particle size of the resulting mixed powder was 0.4 μm. The slurry was dried and granulated by a spray dryer to prepare a source powder.

The resulting mixed powder was mixed with an organic binder containing a wax, a plasticizer, and a thermoplastic resin. Thereafter, the mixture was injection-molded to provide rectangular plate-shaped green bodies (test piece shape) each measuring 30 mm × 25 mm and 1.0 mm in thickness, and bracket-shaped green bodies each having dimensions of I/O: 0.506 mm and the thickness of the gingival side wall: 0.506 mm.

Each of the resulting green bodies was heated at 450°C in the atmosphere and then fired at 1,500°C for 2 hours in the atmosphere to provide a primary sintered body. The obtained primary sintered body was placed in an inner container composed of yttria. The inner container containing the primary sintered body was placed in an outer container composed of carbon.

In this state, the primary sintered body was subjected to HIP treatment in a 99.9% argon gas atmosphere at a heating rate of 600 °C/h, a HIP temperature of 1,750°C, a HIP pressure of 150 MPa and a holding time of 1 hour. After the HIP treatment, the temperature was lowered from the sintering temperature to room temperature to provide a HIP-treated body. The temperature lowering rate from the HIP temperature to 1,000°C was 45 °C/min.

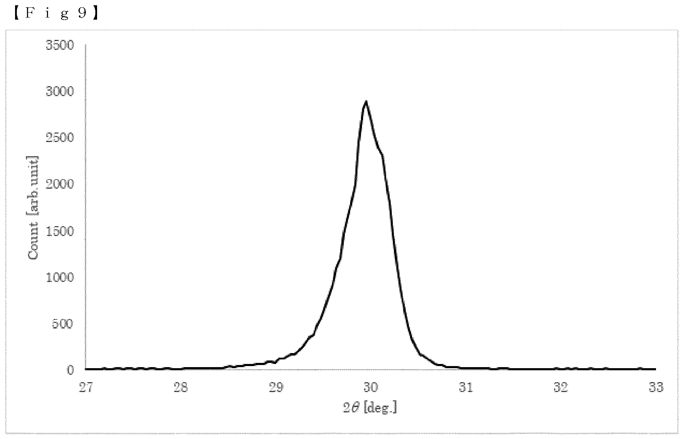

The resulting HIP-treated body was heat-treated at 1,000°C for 1 hour in the atmosphere to provide a colorless translucent sintered body. The resulting sintered body was a sintered body composed of zirconia that formed a solid solution with 4.1% by mole of lanthanum and 2.9% by mole of yttrium. The average crystal grain size was 45 μm. The XRD pattern illustrated in Fig. 9 indicated that the average crystallite size was 27 nm. The average crystallite size was smaller than the average crystal grain size. This indicated that the resulting sintered body contained a tetragonal domain and a cubic domain in the crystal grain. The in-line transmittance of the resulting test piece-shaped sintered body was measured, and the torque strength and the in-line transmittance of the bracket-shaped sintered body were measured. With regard to the bracket-shaped sintered body, a measurement sample having a sample thickness q1 of 0.3 mm was taken out by abrasive cutting, and subjected to aging treatment. Thereafter, the in-line transmittance $T_{0.3}$ [%] at a sample thickness of 0.3 mm was measured. The in-line transmittance $T_1$ [%] at a sample thickness of 1 mm was calculated from formula (1) and used as the converted transmittance.

Example 2

Sintered bodies of this example were produced in the same manner as in Example 1, except that injection molding was performed in such a manner that each bracket-shaped green body had a shape with an I/O of 0.813 mm and a thickness of the gingival side wall of 0.813 mm. The in-line transmittance of each of the resulting test piece-shaped sintered bodies was measured, and the torque strength and the converted transmittance of each of the bracket-shaped sintered bodies were measured.

Comparative Example 1

An orthodontic bracket composed of alumina, which is a standard orthodontic bracket, was produced by the following method.
A high-purity alumina powder (99.99% pure, BET specific surface area: 14 m$^2$/g) was mixed with an organic binder containing a wax, a plasticizer, and a thermoplastic resin to prepare an alumina compound.
The resulting alumina compound was injection-molded to provide rectangular plate-shaped green bodies (test piece shape) each measuring 30 mm × 25 mm and 1.0 mm in thickness, and bracket-shaped green bodies each having dimensions of I/O: 0.508 mm and the thickness of the gingival side wall: 0.508 mm.
Each of the resulting green bodies was heated in the atmosphere at 450°C and then fired in the atmosphere at 1,300°C for 2 hours to provide a primary sintered body. The resulting primary sintered body was subjected to HIP treatment in a 99.9% argon gas atmosphere at a heating rate of 600 °C/h, a HIP temperature of 1,500°C, a HIP pressure of 150 MPa and a holding time of 1 hour. After the HIP treatment, the temperature was lowered from the sintering temperature to room temperature to provide a HIP-treated body, which was used as a sintered body of this comparative example. The sintered body of this comparative example was colorless and translucent. The in-line transmittance of the resulting test piece-shaped sintered body was measured, and the torque strength and the converted transmittance of the bracket-shaped sintered body were measured. With regard to the bracket-shaped sintered body, a measurement sample having a sample thickness q1 of 0.3 mm was taken out by abrasive cutting. The in-line transmittance $T_{0.3}$ [%] at a sample thickness of 0.3 mm was measured. Then the in-line transmittance $T_1$ [%] at a sample thickness of 1 mm was calculated from formula (1) and used as the converted transmittance.

Comparative Example 2

Sintered bodies of this comparative example were produced in the same manner as in Comparative example 1, except that injection molding was performed in such a manner that each bracket-shaped green body had a shape with an I/O of 0.814 mm and a thickness of the gingival side wall of 0.814 mm. The in-line transmittance of each of the resulting test piece-shaped sintered bodies was measured, and the torque strength and the converted transmittance of each of the bracket-shaped sintered bodies were measured.

Comparative Example 3

Sintered bodies of this comparative example were produced in the same manner as in Comparative example 1, except that the HIP temperature was 1,300°C. The in-line transmittance of each of the resulting test piece-shaped sintered bodies was measured, and the torque strength and the converted transmittance of each of the bracket-shaped sintered bodies were measured. With regard to the bracket-shaped sintered body, a measurement sample having a sample thickness q1 of 0.3 mm was taken out by abrasive cutting. The in-line transmittance $T_{0.3}$ [%] at a sample thickness of 0.3 mm was measured. Then the in-line transmittance $T_1$ [%] at a sample thickness of 1 mm was calculated from formula (1) and used as the converted transmittance.

Comparative Example 4

Sintered bodies of this comparative example were produced in the same manner as in Comparative example 3, except that injection molding was performed in such a manner that each bracket-shaped green body had a shape with an I/O of 0.814 mm and a thickness of the gingival side wall of 0.814 mm. The in-line transmittance of each of the resulting test piece-shaped sintered bodies was measured, and the torque strength and the converted transmittance of each of the bracket-shaped sintered bodies were measured.

Comparative Example 5

Sintered bodies composed of zirconia that formed a solid solution with 4.1% by mole of lanthanum and 2.9% by mole of yttrium were produced in the same manner as in Example 1, except that the outer container was not used, a zirconia container with a lid was used as the inner container, and each bracket-shaped green body was formed by injection molding so as to have a shape with an I/O of 1.016 mm and a thickness of the gingival side wall of 0.864 mm. These were used as sintered bodies of this comparative example. The in-line transmittance of each of the resulting test piece-shaped sintered bodies was measured, and the torque strength of each of the bracket-shaped sintered bodies was measured.

Comparative Example 6

Sintered bodies composed of zirconia that formed a solid solution with 4.1% by mole of lanthanum and 2.9% by mole of yttrium were produced in the same manner as in Example 1, except that an outer container composed of yttria was used instead of the outer container composed of carbon, and each bracket-shaped green body was formed by injection molding so as to have a shape with an I/O of 1.016 mm and a thickness of the gingival side wall of 0.864 mm. These were used as sintered bodies of this comparative example. The in-line transmittance of each of the resulting test piece-shaped sintered bodies was measured, and the torque strength of each of the bracket-shaped sintered bodies was measured.

Table 1 presents the composition of the sintered bodies, the dimensions of the orthodontic brackets, and the HIP temperature in the examples and comparative examples.

[Table 1]

| | Composition [mol%] | | | | Dimensions of orthodontic bracket | | HIP temperature [°C] |
|---|---|---|---|---|---|---|---|
| | $ZrO_2$ | $Y_2O_3$ | $La_2O_3$ | $Al_2O_3$ | In-out dimension [mm] | Thickness of gingival side wall [mm] | |
| Example 1 | 93.0 | 2.9 | 4.1 | 0.0 | 0.506 | 0.506 | 1750 |
| Example 2 | 93.0 | 2.9 | 4.1 | 0.0 | 0.813 | 0.813 | 1750 |
| Comparative example 1 | 0.0 | 0.0 | 0.0 | 100.0 | 0.508 | 0.508 | 1500 |
| Comparative example 2 | 0.0 | 0.0 | 0.0 | 100.0 | 0.814 | 0.814 | 1500 |
| Comparative example 3 | 0.0 | 0.0 | 0.0 | 100.0 | 0.508 | 0.508 | 1300 |
| Comparative example 4 | 0.0 | 0.0 | 0.0 | 100.0 | 0.814 | 0.814 | 1300 |
| Comparative example 5 | 93.0 | 2.9 | 4.1 | 0.0 | 1.016 | 0.864 | 1750 |
| Comparative example 6 | 93.0 | 2.9 | 4.1 | 0.0 | 1.016 | 0.864 | 1750 |

Table 2 presents the results of the torque strength, the in-line transmittance, and the converted transmittance of the sintered bodies in the examples and comparative examples.

Table 3 presents the calculated value obtained by dividing the torque strength by the in-out dimension or the thickness of the gingival side wall, as the torque strength per dimension of the bracket.

[Table 2]

| | Torque strength | | | | | In-line transmittance [%] | Converted transmittance [%] |
|---|---|---|---|---|---|---|---|
| | Average torque strength [kgf·cm] | Maximum torque strength [kgf·cm] | Minimum torque strength [kgf·cm] | Number of torque strength measurements N | Torque strength deviation | Test piece | Orthodontic bracket |
| Example 1 | 1.05 | 1.14 | 0.98 | 11 | 0.05 | 45 | 14 |
| Example 2 | 1.33 | 1.67 | 1.09 | 15 | 0.16 | 45 | 14 |
| Comparative example 1 | 0.63 | 0.76 | 0.51 | 12 | 0.13 | 11 | 8.1 |
| Comparative example 2 | 1.00 | 1.13 | 0.78 | 14 | 0.15 | 11 | 8.1 |
| Comparative example 3 | 0.98 | 1.21 | 0.60 | 14 | 0.17 | 13 | 2.4 |
| Comparative example 4 | 1.33 | 1.82 | 0.62 | 5 | 0.49 | 13 | 2.4 |
| Comparative example 5 | 0.98 | - | - | 3 | - | 46 | - |
| Comparative example 6 | 1.34 | - | - | 1 | - | 34 | - |

[Table 3]

| | Calculated value obtained by dividing torque strength by in-out dimension or thickness of gingival side wall | |
| --- | --- | --- |
| | Average torque strength [kgf·cm]/in-out dimension [mm] | Average torque strength [kgf cm]/thickness of gingival side wall [mm] |
| Example 1 | 2.08 | 2.08 |
| Example 2 | 1.64 | 1.64 |
| Comparative example 1 | 1.24 | 1.24 |
| Comparative example 2 | 1.23 | 1.23 |
| Comparative example 3 | 1.93 | 1.93 |
| Comparative example 4 | 1.63 | 1.63 |
| Comparative example 5 | 0.96 | 1.13 |
| Comparative example 6 | 1.32 | 1.55 |

The measurement results of the sintered bodies of Examples 1 and 2 indicate that the sintered bodies of the present embodiment have both excellent mechanical strength and transparency and also have small variations in mechanical strength. In contrast, the sintered bodies of Comparative examples 1 to 4 are mostly inferior in transparency. The sintered bodies of Comparative example 5 in which the double container including the inner container and the outer container was not used at the time of sintering and Comparative example 6 in which the outer container composed of carbon was not used at the time of sintering do not have as excellent mechanical strength and transparency as in Examples.

This application claims priority to Japanese Patent Application No. 2021-89267 filed May 27, 2021, the entire content of which is incorporated herein by reference. Reference Signs List

10 base, 20 side wall portion, 20a gingival side wall portion, 20b occlusal side wall portion, 30 wire slot, 31 wire slot side surface, 31a gingival-side wire slot side surface, 31b occlusal-side wire slot side surface, 32 wire slot bottom surface, 40 recess, 40a gingival side recess, 40b occlusal side recess, 100 orthodontic bracket

## Claims

1. A sintered body, comprising a crystal grain having a cubic domain and a tetragonal domain, a stabilizer and lanthanum being dissolved in zirconia to form a solid solution as a matrix, and an amount of the stabilizer contained being 1% or more by mole and 6% or less by mole,
wherein an average torque strength is 1.00 kgf·cm or more, and an in-line transmittance is 35% or more for visible light having a wavelength of 600 nm at a sample thickness of 1 mm.

2. The sintered body according to Claim 1, wherein a deviation of torque strength is 0.30 or less.

3. The sintered body according to Claim 1 or 2, wherein a lanthanum content is 1% or more by mole and 10% or less by mole.

4. The sintered body according to Claim 1 or 2, wherein the stabilizer is at least one selected from the group consisting of yttrium, scandium, calcium, magnesium and cerium.

5. The sintered body according to Claim 1 or 2, comprising at least one of a transition metal and a lanthanoid other than lanthanum.

6. A method for producing the sintered body according to Claim 1 or 2, comprising: a mixing step of mixing a zirconia source, a stabilizer source and a lanthanum source to prepare a mixed powder; a molding step of molding the mixed powder to provide a green body; a sintering step of placing the green body in an inner container, placing the inner container in an outer container and sintering the green body at a sintering temperature of 1,650°C or higher to provide a sintered body; and a temperature lowering step of lowering the temperature from the sintering temperature to 1,000°C at a temperature lowering rate of more than 1 °C/min.

7. The method for producing a sintered body according to Claim 6, wherein the outer container is composed of carbon.

8. An orthodontic bracket, comprising the sintered body according to Claim 1 or 2.

9. An orthodontic bracket, comprising a sintered body containing a crystal grain having a cubic domain and a tetragonal domain, a stabilizer and lanthanum being dissolved in zirconia to form a solid solution as a matrix, and an amount of the stabilizer contained being 1% or more by mole and 6% or less by mole, wherein an average torque strength is 1.00 kgf·cm or more, and an in-line transmittance is 10% or more for visible light having a wavelength of 600 nm at a sample thickness of 1 mm after hydrothermal treatment at 140°C for 72 hours.

10. The orthodontic bracket according to Claim 9, wherein a deviation of torque strength is 0.30 or less.

【Ｆｉｇ１】

【Fig2】

100

90

20a

31a

32

31b

20b

X

Z Y

【Ｆｉｇ３】

【Ｆｉｇ４】

【Ｆｉｇ５】

【Fig 6】

【Ｆｉｇ７】

20b　　　　32　　　　　　　　20a　　　102

200

【Ｆ ｉ ｇ 8】

302

301

300

【Ｆ ｉ ｇ ９】

## INTERNATIONAL SEARCH REPORT

| International application No. |
|---|
| **PCT/JP2022/021371** |

### A. CLASSIFICATION OF SUBJECT MATTER

*C04B 35/486*(2006.01)i; *A61C 7/14*(2006.01)i; *C04B 35/645*(2006.01)i
FI:   C04B35/486; C04B35/645; A61C7/14

According to International Patent Classification (IPC) or to both national classification and IPC

### B. FIELDS SEARCHED

Minimum documentation searched (classification system followed by classification symbols)

C04B35/486; A61C7/14; C04B35/645

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2018-002495 A (TOSOH CORP) 11 January 2018 (2018-01-11)<br>claim 1, paragraphs [0042]-[0066], fig. 3-7, 9-12 | 1-10 |
| X | JP 2017-214266 A (TOSOH CORP) 07 December 2017 (2017-12-07)<br>claim 1, paragraphs [0046]-[0074], fig. 5 | 1-10 |
| X | JP 2017-105689 A (TOSOH CORP) 15 June 2017 (2017-06-15)<br>claim 8 | 6, 7 |
| X | JP 2020-001988 A (TOSOH CORP) 09 January 2020 (2020-01-09)<br>claim 7 | 6, 7 |
| A | JP 2011-051881 A (TOSOH CORP) 17 March 2011 (2011-03-17)<br>claims 1-13 | 1-10 |
| A | JP 2000-095564 A (DAIICHI KIGENSOKAGAKU KOGYO CO LTD) 04 April 2000<br>(2000-04-04)<br>claims 1-8 | 1-10 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 July 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/021371**

| C. | DOCUMENTS CONSIDERED TO BE RELEVANT | |
|---|---|---|
| Category* | Citation of document, with indication, where appropriate, of the relevant passages | Relevant to claim No. |
| A | JP 2013-515671 A (3M INNOVATIVE PROPERTIES COMPANY) 09 May 2013 (2013-05-09) claim 1 | 1-10 |

Form PCT/ISA/210 (second sheet) (January 2015)

INTERNATIONAL SEARCH REPORT
Information on patent family members

International application No.

**PCT/JP2022/021371**

| Patent document cited in search report | | | Publication date (day/month/year) | Patent family member(s) | | | Publication date (day/month/year) |
|---|---|---|---|---|---|---|---|
| JP | 2018-002495 | A | 11 January 2018 | (Family: none) | | | |
| JP | 2017-214266 | A | 07 December 2017 | (Family: none) | | | |
| JP | 2017-105689 | A | 15 June 2017 | US | 2017/0349494 | A1 | |
| | | | | claim 8 | | | |
| | | | | CN | 107108374 | A | |
| JP | 2020-001988 | A | 09 January 2020 | (Family: none) | | | |
| JP | 2011-051881 | A | 17 March 2011 | US | 2012/0094823 | A1 | |
| | | | | claims 1-14 | | | |
| | | | | CN | 102471168 | A | |
| JP | 2000-095564 | A | 04 April 2000 | (Family: none) | | | |
| JP | 2013-515671 | A | 09 May 2013 | US | 2012/0277088 | A1 | |
| | | | | claim 1 | | | |
| | | | | CN | 102686536 | A | |
| | | | | WO | 2011/082022 | A1 | |

Form PCT/ISA/210 (patent family annex) (January 2015)

**EP 4 349 800 A1**

**REFERENCES CITED IN THE DESCRIPTION**

**Patent documents cited in the description**

- JP 2008050247 A
- JP 2009269812 A
- JP 2017105689 A
- JP 2020001988 A
- JP 2021089267 A